# EUROPÄISCHE PATENTSCHRIFT

(11) **EP 1 413 733 B1**
(45) Veröffentlichungstag und Bekanntmachung des Hinweises auf die Patenterteilung: **01.02.2006**
(21) Anmeldenummer: 03020303.8
(22) Anmeldetag: 09.09.2003
(51) Int. Cl.: F02F 11/00, G01M 3/32

(54) **Abdichtvorrichtung**
Sealing device
Dispositif d'étanchéité

(30) Priorität: 25.10.2002 DE 20216543 U
(43) Veröffentlichungstag der Anmeldung: 28.04.2004
(73) Patentinhaber: Bayer GmbH Maschinenfabrik, 73730 Esslingen (DE)
(72) Erfinder: Bayer, Werner, 73732 Esslingen (DE)
(74) Vertreter: Abel, Martin

(56) Entgegenhaltungen:
- PATENT ABSTRACTS OF JAPAN Bd. 1995, Nr. 05, 30. Juni 1995 (1995-06-30) & JP 7 049286 A (HONDA MOTOR CO LTD), 21. Februar 1995 (1995-02-21)

## Beschreibung

Die Erfindung betrifft eine Abdichtvorrichtung zum vorübergehenden dichten Verschließen einer Öffnung eines auf Dichtheit zu prüfenden Werkstückes, beispielsweise eines Kurbelgehäuses oder eines Zylinderkopfes, mit einer an einer Vorderseite mit einer Dichtungsstruktur versehenen Abdichteinheit und mit einer Stellvorrichtung zum wahlweisen Positionieren der Abdichteinheit in einer von dem zu prüfenden Werkstück entfernten Grundstellung oder einer an das zu prüfende Werkstück angenäherten Arbeitsstellung, wobei die Dichtungsstruktur in der Arbeitsstellung in der Lage ist, mit der die zu verschließende Öffnung des Werkstückes umgebenden Werkstück-Oberfläche in Dichtkontakt zu treten.

Zahlreiche Komponenten von Automobilen, beispielsweise Kurbelgehäuse oder Zylinderköpfe, müssen während der Fertigung und/oder Montage einer Dichtheitsprüfung unterzogen werden. Bei der Prüfung werden die Öffnungen des betreffenden Werkstückes verschlossen und wird anschließend der Innenraum des Werkstückes mit Überdruck beaufschlagt, um anhand des zeitabhängigen Druckverlaufes eine eventuelle Leckage zu ermitteln.

Um eine Öffnung eines zu prüfenden Werkstückes dicht zu verschließen, wird eine mit einer Dichtungsstruktur versehene Abdichteinheit vergleichbar einer Abdeckung über der betreffenden Öffnung platziert und mit hoher Kraft an das Werkstück angepresst. Soweit der Anmelderin bekannt ist, ist bei bisherigen Abdichtvorrichtungen die Abdichteinheit von einer starren, die Dichtungsstruktur tragenden Platte gebildet und wird zur Positionierung der Abdichteinheit in der Arbeitsstellung sowie zum Anpressen an das Werkstück ein Hydraulikantrieb oder ein riesig dimensionierter Pneumatikantrieb eingesetzt. Da bei großen Werkstücköffnungen während des Prüfvorganges hohe Druckkräfte auf die Abdichteinheit wirken und für den Beladevorgang ein Frei-Wegfahren der Abdichteinheit notwendig ist, muss der Hydraulikantrieb oder Pneumatikantrieb relativ groß dimensioniert sein, um die für eine sichere Abdichtung sorgende Anpresskraft aufzubringen. Außerdem bedarf es einer sehr stabilen und mithin voluminösen Abdichteinheit, um durch die punktuelle-Einleitung der Kräfte verursachte Durchbiegungen der Abdichteinheit gering zu halten. All dies führt zu einem konstruktiv aufwendigen und voluminösen Aufbau der Abdichtvorrichtung.

Eine solche Vorrichtung ist aus der JP 7049286 bekannt.

Es ist die Aufgabe der vorliegenden Erfindung, eine Abdichtvorrichtung zu schaffen, die mit weniger Aufwand und mit kompakteren Abmessungen realisierbar ist.

Zur Lösung dieser Aufgabe ist vorgesehen, dass die Abdichteinheit eine mit der Stellvorrichtung antriebsmäßig verbundene Trägerplatte und eine an der Trägerplatte relativ zu dieser in und entgegen einer Anpressrichtung verstellbar gehaltene, an ihrer in der Anpressrichtung weisenden Vorderseite mit der Dichtungsstruktur versehene Dichtplatte enthält, und dass zwischen der Trägerplatte und der Dichtplatte eine sich zumindest annähernd über die rückseitige Plattenfläche der Dichtplatte hinweg erstreckende Fluidkammer vorgesehen ist, die mit mindestens einem Fluidkanal für die Zufuhr und Abfuhr eines Beaufschlagungsfluides kommuniziert, wobei die Dichtplatte durch Fluidbeaufschlagung der Fluidkammer relativ zur Trägerplatte in der Anpressrichtung verstellbar ist.

Bei dieser Abdichtvorrichtung wird die eigentliche Anpresskraft nicht mehr von der für das wahlweise Positionieren in der Grundstellung und in der Arbeitsstellung verantwortlichen Stellvorrichtung aufgebracht, sondern durch einen in die Abdichteinheit integrierten fluidbetätigten Aktor, der trotz Erzeugung hoher Anpresskräfte eine sehr gleichmäßige Kräfteverteilung bewirkt. Die Abdichteinheit enthält mit der Trägerplatte und der Dichtplatte nunmehr zwei gesonderte Platten, wobei die Trägerplatte zum Zwecke der erwähnten Positionierung mit der Stellvorrichtung bewegungsgekoppelt ist, während die Dichtplatte relativ zu der Trägerplatte beweglich ist und die Dichtungsstruktur aufweist. Befindet sich die Abdichteinheit in der Arbeitsstellung, kann die zwischen der Trägerplatte und der Dichtplatte definierte Fluidkammer mit unter einem entsprechenden Überdruck stehendem Beaufschlagungsfluid - insbesondere Druckluft - beaufschlagt werden, sodass die Dichtplatte großflächig verteilt beaufschlagt wird und ohne Durchbiegungsgefahr mit hoher Kraft an das zu prüfende Werkstück angepresst wird. Somit lässt sich eine zuverlässige Abdichtung auch großer Werkstücköffnungen bei kompakten Abmessungen realisieren.

Vorteilhafte Weiterbildungen der Erfindung gehen aus den Unteransprüchen hervor.

Bedingt durch die erfindungsgemäße Ausgestaltung besteht die vorteilhafte Möglichkeit, auf eine hydraulische Betriebsweise der Stellvorrichtung zu verzichten und stattdessen eine pneumatisch oder insbesondere eine elektrisch betätigte Stellvorrichtung einzusetzen.

Die Anordnung ist zweckmäßigerweise so getroffen, dass die beim Übergang zwischen der Grundstellung und der Arbeitsstellung ausgeführte Positionierbewegung eine Linearbewegung ist. Dabei ist die Trägerplatte zweckmäßigerweise über eine Linearführung an einer ortsfesten Halterung verstellbar geführt. Zweckmäßigerweise verläuft die durch die Beaufschlagung der Fluidkammer hervorrufbare Anpressbewegung der Dichtplatte mit gleicher Orientierung wie die Positionierung der Abdichteinheit.

Bei einer weiteren, sehr vorteilhaften Ausgestaltung sind Abstützmittel vorgesehen, durch die die Trägerplatte, wenn sich die Abdichteinheit in der Arbeitsstellung befindet, unabhängig von der Stellvorrichtung entgegen der Anpressrichtung abgestützt wird. Auf diese Weise können die von dem in die Abdichteinheit integrierten fluidbetätigten und insbesondere pneumatischen Aktor erzeugten Anpresskräfte vom Vorrichtungsgestell aufgenommen werden, wobei der Stellantrieb nicht belastet wird. Dies begünstigt den Einsatz eines klein dimensionierten Stellantriebes und insbesondere einer Stellvorrichtung mit Pneumatik- oder Elektroantrieb. Die Stellvorrichtung und der fluidbetätigte Aktor der Abdichteinheit sind unabhängig voneinander und dienen unterschiedlichen Zwecken, wobei die Stellvorrichtung eine reine Positionieraufgabe übernehmen kann und die erforderlichen Anpresskräfte durch den fluidbetätigten Aktor erzeugt werden, der die abgestützte Trägerplatte, die diesbezüglich verstellbare Dichtplatte und die dazwischen angeordnete Fluidkammer beinhaltet.

Zum Hervorrufen der Stellbewegung der Abdichteinheit ist die Stellvorrichtung zweckmäßigerweise über eine Koppeleinrichtung mit der Trägerplatte antriebsmäßig verbunden. Die Koppeleinrichtung ist zweckmäßigerweise so ausgebildet und angeordnet, dass sie beim Übergang der Abdichteinheit in die Arbeitsstellung mit einer entgegen der Anpressrichtung orientierten Abstützfläche vor eine in der Anpressrichtung weisenden Gegenabstützfläche der Abstützmittel platziert wird. Die Reaktionskraft der Anpresskräfte kann somit über die Koppeleinrichtung in die gestellfeste Gegenabstützfläche abgeleitet werden.

Eine bevorzugte Ausgestaltung der Abdichteinrichtung sieht vor, dass die Koppeleinrichtung einenends über ein erstes Gelenk schwenkbeweglich an der Trägerplatte und andernends über ein zweites Gelenk schwenkbeweglich an dem entlang eines Kreisbogens bewegbaren Abtriebsteil einer um eine Antriebsachse verdrehbaren Kurbel der Stellvorrichtung gelagert ist, wobei die Kurbel mit einem zur Erzeugung der Kurbelbewegung dienenden Antrieb gekoppelt ist. Es ist dabei insbesondere vorgesehen, dass das zweite Gelenk den Totpunkt der Kurbel überschreitet, wenn die Abdichteinheit durch entsprechendes Verdrehen oder Verschwenken der Kurbel von der Grundstellung in die Arbeitsstellung verbracht wird. In Verbindung mit zugeordneten Abstützmitteln erreicht man auf diese Weise die bevorzugte, von der Stellvorrichtung unabhängige Abstützung der Trägerplatte ohne zusätzliche Verriegelungsmaßnahmen. Solche wären zwar im Rahmen der Erfindung durchaus ebenfalls denkbar, sie sind jedoch in der Regel mit einem höheren fertigungs- und steuerungstechnischen Aufwand verbunden.

Wenn die Dichtplatte begrenzt kippbar an der Trägerplatte gehalten ist, können selbsttätig Lageungenauigkeiten oder O-berflächenungenauigkeiten des zu prüfenden Werkstückes ausgeglichen werden.

Nachfolgend wird die Erfindung anhand der beiliegenden Zeichnung näher erläutert. In dieser zeigen:
- Figur 1: eine erste Bauform der erfindungsgemäßen Abdichtvorrichtung in schematischer Darstellung, wobei die Abdichteinheit bei Einnahme der Grundstellung gezeigt ist, und
- Figur 2: die Abdichtvorrichtung aus Figur 1 bei in der Arbeitsstellung platzierter Abdichteinheit und bei durch Fluidbeaufschlagung gegen das zu prüfende Werkstück vorgespannter Dichtplatte.

Die in ihrer Gesamtheit mit Bezugsziffer 1 bezeichnete Abdichtvorrichtung enthält ein nur angedeutetes Vorrichtungsgestell 2, das mit einer nicht näher dargestellten Aufnahme verbunden ist, an der sich ein hinsichtlich der Dichtheit zu prüfendes Werkstück 3 lösbar fixieren lässt.

Bei dem Werkstück 3 handelt es sich beispielsweise um ein Kurbelgehäuse oder einen Zylinderkopf eines Kraftfahrzeuges.

Das Werkstück 3 hat einen Innenraum 4, der im späteren Einsatz des fertigen Produktes zur Umgebung hin fluid- und druckdicht zu sein hat. Während der Fertigung oder Montage des Produktes wird daher ein oder mehrere Male eine Dichtheitsprüfung vorgenommen. Dabei wird der Innenraum 4 mit Druckluft beaufschlagt und einem vorbestimmten Überdruck ausgesetzt. Anschließend wird der innerhalb eines bestimmten Zeitraumes auftretende Druckabfall gerriessen, der ein Maß für die Dichtheit der Werkstückwandung ist.

Um die Dichtheitsprüfung vornehmen zu können, müssen mit dem Innenraum 4 in Verbindung stehende Öffnungen des Werkstückes 3 dicht verschlossen werden. Diesem Zweck dient die erfindungsgemäße Abdichtvorrichtung 1. In der Zeichnung ist gezeigt, wie durch die Abdichtvorrichtung 1 eine mit dem Innenraum 4 des Werkstückes 3 verbundene Öffnung 5 vorübergehend, während der Prüf zeit, dicht verschlossen werden kann.

Die Abdichtvorrichtung 1 verfügt über eine Abdichteinheit 6, die gegenüberliegend der zu verschließenden Werkstücköffnung 5 des in der Aufnahme platzierten Werkstückes 3 angeordnet ist. Diese Abdichteinheit 6 ist über eine sich aus zwei Stangenführungseinheiten 7 zusammensetzende Linearführung 8 in Richtung einer Hauptachse 12 relativ zum Vorrichtungsgestell 2 verschiebbar geführt.

Die Abdichteinheit 6 enthält eine gasdichte Trägerplatte 13, deren Plattenebene rechtwinkelig zu der Hauptachse 12 verläuft. Diese Trägerplatte 13 ist diejenige Komponente der Abdichteinheit 6, die mit der Linearführung 8 zusammenarbeitet. Beim Ausführungsbeispiel sind an ihr zwei zueinander beabstandete, parallele Führungsstangen 14 befestigt, die jeweils eine gestellseitig angeordnete Gleit- oder Kugelführungseinrichtung 15 durchsetzen.

Zusätzlich zu der Trägerplatte 13 verfügt die Abdichteinheit 6 über eine als Dichtplatte 16 bezeichnete weitere Platte. Die Dichtplatte 16 ist an der der zu verschließenden Werkstücköffnung 5 zugewandten Vorderseite der Trägerplatte 13 parallel zu dieser angeordnet. Dabei ist die Dichtplatte 16 so an der Trägerplatte 13 gelagert, dass sie relativ zu dieser in der Richtung der Hauptachse 12 bewegbar ist. Diese durch einen Doppelpfeil verursachte Relativbewegung sei als Anpressbewegung 17 bezeichnet. Die Bewegungsrichtung von der Trägerplatte 13 weg und hin zum Werkstück 3 wird als Anpressrichtung 18 benannt.

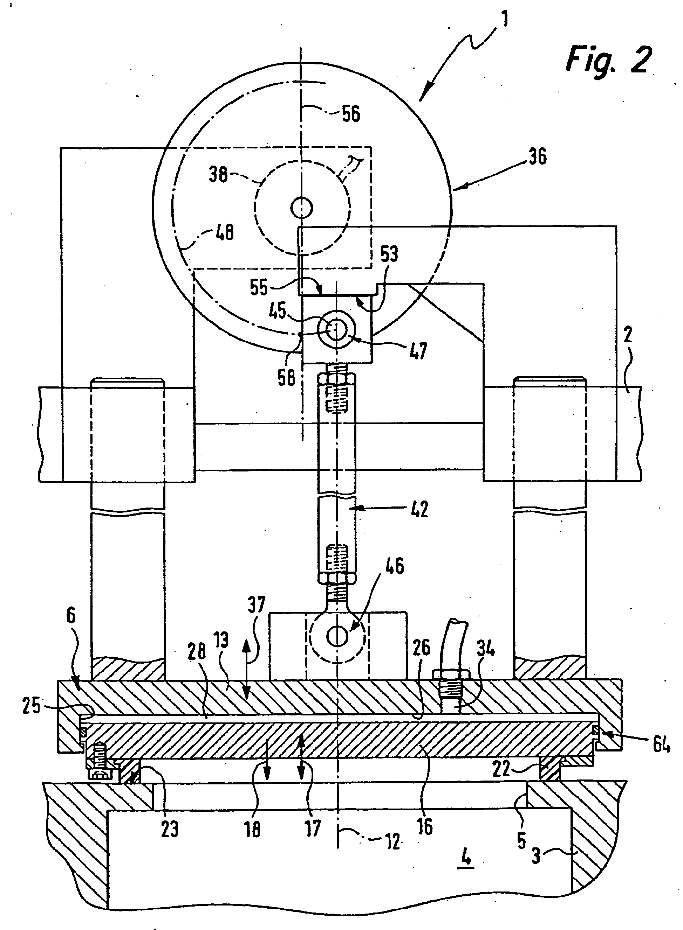

An der von der Trägerplatte 13 wegweisenden Vorderseite der Dichtplatte 16 ist eine Dichtungsstruktur 22 angeordnet. Ihre Gestaltung orientiert sich am Umriss der zu verschließenden Werkstücköffnung 5. Sie ist so ausgebildet, dass sie rings um die Werkstücksöffnung 5 herum an der Werkstück-Oberfläche 23 dicht anliegen kann, wie dies aus Figur 2 hervorgeht. Da die Dichtplatte 16 ebenfalls aus gasdichtem und druckdichtem Material besteht, kann somit die Werkstücköffnung 5 durch die an die Werkstück-Oberfläche 23 unter Überdeckung der Werkstücköffnung 5 angesetzte Dichtplatte 16 dicht verschlossen werden.

Umfangsseitig ist zwischen der Dichtplatte 16 und der Trägerplatte 13 eine umlaufende Dichtung 24 vorgesehen, die zwischen diesen beiden Komponenten abdichtet. Beim Ausführungsbeispiel sitzt sie in einer Umfangsnut der Dichtplatte 16 und kooperiert mit einer radial nach innen weisenden umfangsseitigen Wandfläche 25 einer vorderseitigen Ausnehmung 26 der Trägerplatte 13, in die die Dichtplatte 16 verschiebbar eingesetzt ist. Durch an der Trägerplatte 13 vorgesehene Rückhaltemittel 27, beispielsweise ein nach radial innen vorstehender Bund, wird verhindert, dass die Dichtplatte 16 aus der Trägerplatte 13 herausfällt.

Zwischen der Trägerplatte 13 und der Dichtplatte 16 ist innerhalb der Ausnehmung 26 ein Zwischenraum vorhanden, der eine Fluidkammer 28 bildet. Sie wird von der der Trägerplatte 13 zugewandten rückseitigen Plattenfläche 32 der Dichtplatte 16, der dieser gegenüberliegenden und an der Trägerplatte 13 vorgesehenen Grundfläche 33 der Ausnehmung 26 und der umfangsseitigen Wandfläche 25 der Trägerplatte 13 begrenzt. Das Volumen der Fluidkammer 28 ist variabel und hängt von der momentanen Relativposition zwischen der Trägerplatte 13 und der diesbezüglich bewegbaren Dichtplatte 16 ab.

In die Fluidkammer 28 mündet mindestens ein und beim Ausführungsbeispiel genau ein Fluidkanal 34, durch den hindurch ein Beaufschlagungsfluid in die Fluidkammer 28 eingespeist oder aus der Fluidkammer 28 abgeführt werden kann. An den Fluidkanal 34 ist zu diesem Zweck eine Fluidleitung 35 angeschlossen, die zu einer nicht näher dargestellten Steuereinrichtung führt, über die die wahlweise Verbindung mit einer Druckmittelquelle oder der Atmosphäre hervorgerufen werden kann.

Somit bildet die Trägerplatte 13 mit der Dichtplatte 16 und der Fluidkammer 28 einen fluidbetätigten Aktor. Bei diesem handelt es sich um einen pneumatischen Aktor, wenn, wie dies bevorzugt vorgesehen ist, Druckluft als Beaufschlagungsfluid eingesetzt wird.

Wird die Fluidkammer 28 mit einem Druckmedium beaufschlagt, wirkt dieses zumindest annähernd vollflächig auf die rückseitige Plattenfläche 32 der Dichtplatte 16 ein, wobei beim Ausführungsbeispiel die gesamte rückseitige Plattenfläche 32 dem entsprechenden Fluiddruck ausgesetzt ist.

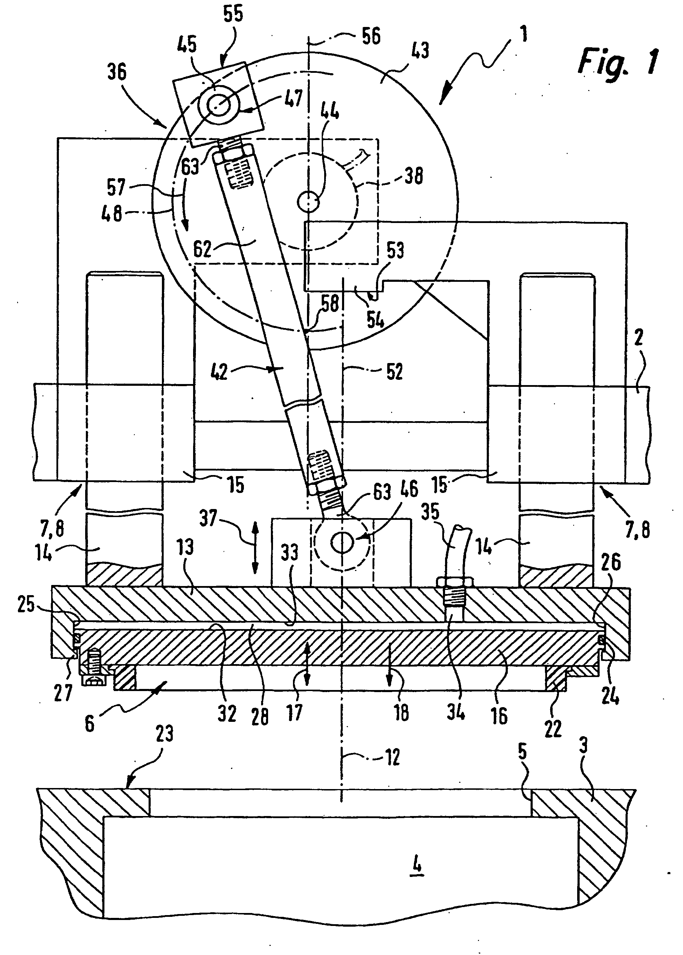

Die Abdichtvorrichtung 1 ist mit einer Stellvorrichtung 36 ausgestattet, die ein wahlweises Positionieren der Abdichteinheit 6 in einer von dem zu prüfenden Werkstück 3 entfernten Grundstellung - in Figur 1 gezeigt - oder in einer an das zu prüfende Werkstück angenäherten Arbeitsstellung - in Figur 2 gezeigt - ermöglicht. Die Grundstellung wird gewählt, wenn ein zu prüfendes Werkstück 3 mit der zu verschließenden Werkstücköffnung 5 gegenüberliegend der die Dichtungsstruktur 22 aufweisenden Vorderseite der Dichtplatte 16 positioniert wird oder wenn ein bereits geprüftes Werkstück entfernt werden soll. In diesem Zusammenhang ist eine fließbandartige Bearbeitung von Werkstücken 3 möglich, wenn diese nacheinander durch eine mit der Abdichtvorrichtung 1 ausgestattete Prüfstation hindurchgeschleust werden. Die oben erwähnte Aufnahme zur Fixierung des Werkstückes 3 kann dabei zumindest teilweise an einer Fördereinrichtung angeordnet sein.

Beim Ausführungsbeispiel führt die Abdichteinheit 6 beim Übergang zwischen der Grundstellung und der Arbeitsstellung eine vertikale Bewegung aus, wobei die Abdichteinheit 6 oberhalb der Werkstücköffnung 5 angeordnet ist. Allerdings ist ein Betrieb auch mit anderer Orientierung möglich. Auch kann ein zu prüfendes Werkstück 3, das über mehrere zu verschließende Werkstücköffnungen 5 verfügt, gleichzeitig von mehreren Abdichtvorrichtungen 1 beaufschlagt werden.

Die Bewegung der Abdichteinheit 6 zwischen der Grundstellung und der Arbeitsstellung sei als Positionierbewegung 37 bezeichnet. Sie ist beim Ausführungsbeispiel gleich wie die Anpressbewegung 17 der Dichtplatte 16 ausgerichtet. Es handelt sich um eine Linearbewegung, geführt durch die Linearführung 8.

Es wäre zwar prinzipiell möglich, die Stellvorrichtung 36 in hydraulisch betätigter Bauart auszuführen. Ein einfacherer und kostengünstigerer Aufbau ist jedoch möglich und auch empfehlenswert, indem eine elektrisch und/oder pneumatisch betätigte Stellvorrichtung 36 eingesetzt wird. Beim Ausführungsbeispiel ist eine elektrisch betätigte Stellvorrichtung 36 vorgesehen, wobei als Antrieb 38 ein Elektromotor eingesetzt wird.

Die Stellvorrichtung 36 ist mit der Trägerplatte 13 der Abdichteinheit 6 antriebsmäßig verbunden. Dies kann unmittelbar geschehen, erfolgt beim Ausführungsbeispiel jedoch unter Zwischenschaltung einer druck- und zugfesten Koppeleinrichtung 42.

Im konkreten Fall enthält die Stellvorrichtung 36 eine insbesondere scheibenartig ausgebildete Kurbel 43, die um eine zu der Hauptachse 12 senkrechte Antriebsachse 44 verdrehbar oder verstellbar ist und die mit radialem Abstand zu der Antriebsachse 44 ein zum Beispiel zapfenartiges Abtriebsteil 45 aufweist. Die Dreh- bzw. Schwenkbewegung der Kurbel 43 wird durch den Antrieb 38 erzeugt.

Die Koppeleinrichtung 42 ist nach Art einer Pleuelstange angeordnet, wobei sie einenends über ein erstes Gelenk 46 schwenkbeweglich an der Trägerplatte 13 und andernends über ein zweites Gelenk 47, ebenfalls schwenkbeweglich, an dem Abtriebsteil 45 der Kurbel 43 gelagert ist. Die Gelenkachsen verlaufen parallel zu der Antriebsachse 44.

Die Kurbel 43 ist gegenüberliegend der Rückseite der Trägerplatte 13 mit Abstand zu dieser platziert, wobei die Koppeleinrichtung 42 den Abstand überbrückt. Wird die Kurbel 43 verdreht, bewegt sich das Abtriebsteil 45 entlang eines strichpunktiert angedeuteten Kreisbogens 48, wobei die Koppeleinrichtung 42 eine Pleuelbewegung ausführt und die lineare Positionierbewegung 37 der Abdichteinheit 6 hervorruft.

Das erste Gelenk 46 ist zweckmäßigerweise bezüglich der Antriebsachse 44 der Kurbel 43 quer zu der Anpressrichtung 18 bzw. der Hauptachse 12 versetzt angeordnet. Gleichzeitig befindet sich auf gleicher, zur Hauptachse 12 paralleler Linie 52 mit dem ersten Gelenk 46 eine der Trägerplatte 13 zugewandte Gegenabstützfläche 53, die Bestandteil von fest mit dem Vorrichtungsgestell 2 verbundenen, ortsfesten Abstützmitteln 54 ist.

An der Koppeleinrichtung 42 ist, insbesondere im Bereich des zweiten Gelenkes 47, eine Abstützfläche 55 angeordnet, die in der Lage ist, in der Arbeitsstellung an der Gegenabstützfläche 53 der Abstützmittel 54 anzuliegen.

In der Grundstellung gemäß Figur 1 befindet sich das Abtriebsteil 45 der Kurbel 43 mit Bezug auf die Trägerplatte 13 im Bereich jenseits der Antriebsachse 44 und insbesondere auf einer ersten Seite einer durch die Hauptachse 12 und die Antriebsachse 44 aufgespannten Bezugsebene 56. Das erste Gelenk 46 wie auch die Abstützfläche 55 befinden sich auf der entgegengesetzten zweiten Seite dieser Bezugsebene 56, sodass die Kurbeleinrichtung 42 mit Bezug zur Hauptachse 12 einen schrägen Verlauf hat.

Wird nun der Antrieb 38 aktiviert, verdreht sich die Kurbel 43, und das Abtriebsteil 45 zusammen mit dem Gelenk 47 verlagern sich gemäß Pfeil 57 entlang dem Kreisbogen 48 in Richtung zur Abdichteinheit 6. Letztere wird dabei durch die Koppeleinrichtung 42 in der Anpressrichtung 18 hin zum Werkstück 3 verschoben.

Während dieser Bewegung durchläuft das Abtriebsteil 45 bzw. das zweite Gelenk 47 den auf der Bezugsebene 56 liegenden Totpunkt 58 der Kurbel 43 und gelangt auf die zweite Seite der Bezugsebene 56. Allerdings ist die Auslenkung über den Totpunkt 58 hinaus relativ gering und endet, wenn sich das zweite Gelenk 47 auf der besagten Linie 52 mit dem ersten Gelenk 46 befindet. Die Bewegung endet hier, da die Koppeleinrichtung 42 mit der Abstützfläche 55 auf die Gegenabstützfläche 53 aufläuft und mithin an einer Weiterbewegung gehindert wird.

In dieser Arbeitsstellung werden jegliche Kräfte, die von der Trägerplatte 13 über das erste Gelenk 46 in die Koppeleinrichtung 42 eingeleitet werden, direkt auf die Abstützmittel 54 und somit das Vorrichtungsgestell 2 übertragen, ohne die Kurbel 43 oder den Antrieb 38 zu belasten. Die Trägerplatte 13 wird also durch die Abstützmittel 54 unabhängig von der Stellvorrichtung 36 entgegen der Anpressrichtung 18 abgestützt.

Um die Grundstellung wieder herzustellen, wird die Kurbel 43 im entgegengesetzten Richtungssinne aktiviert, sodass das zweite Gelenk 47 in die anfängliche Stellung zurückkehrt und die Koppeleinrichtung 42 die Trägerplatte 13 und somit die gesamte Abdichteinheit 6 in die Grundstellung zurückzieht.

Die Kurbel 43 kann somit zu einer hin- und hergehenden Bewegung angetrieben werden, um wahlweise die Grundstellung oder die Arbeitsstellung zu realisieren.

Anstelle einer scheibenförmigen Gestaltung könnte die Kurbel 43 auch eine hebelartige Formgebung aufweisen.

Zweckmäßigerweise ist die Koppeleinrichtung 42 in ihrer Länge verstellbar, um die Kinematik der Positionierbewegung 37 zu beeinflussen. Beim Ausführungsbeispiel ist die Verstellmöglichkeit dadurch gegeben, dass die Koppeleinrichtung 42 ein zentrales Rohrstück 62 aufweist, in das endseitig Lageraugen 63 eingeschraubt sind, die an den beiden Gelenken 46, 47 fixiert sind.

Ist die Abdichteinheit 6 gemäß Figur 2 in der Arbeitsstellung platziert, befindet sich die Dichtplatte 16 in unmittelbarer Nähe des Werkstückes 3 oder liegt bereits mit der Dichtungsstruktur 22 an der Werkstück-Oberfläche 23 an. Nun kann die bis dahin noch druckentlastete Fluidkammer 28 über den Fluidkanal 34 mit Überdruck beaufschlagt werden, beispielsweise in der Größenordnung von 6 bar, was zur Folge hat, dass sich in der Fluidkammer 28 Fluidkräfte aufbauen, die die Dichtplatte 16 mit ihrer Dichtstruktur 22 sehr fest gegen die Werkstück-Oberfläche 23 andrücken. Da sich diese Kräfte über die gesamte Grundfläche der Dichtplatte 16 verteilen, unterliegt diese einer gleichmäßigen Belastung, sodass sie kaum mehr auf Durchbiegung beansprucht wird. Aus diesem Grund kann sie relativ dünn ausgebildet werden. Entsprechendes gilt für die Trägerplatte 13, die die Gegenkraft aufnimmt und an die Koppeleinrichtung 42 weiterleitet.

Der mögliche Hub der Dichtplatte 16 kann sehr gering sein und beispielsweise im Bereich von 3 bis 6 mm liegen. Bedingt durch die große Grundfläche der Dichtplatte kann bereits mit einer relativ geringen Druckbeaufschlagung der Fluidkammer 28 eine sehr hohe, in der Anpressrichtung 18 auf die Dichtplatte 16 ausgeübte Anpresskraft hervorgerufen werden. Gleichwohl wird die Stellvorrichtung 36 vor Überbeanspruchung geschützt, weil die Kräfte von den gestellfesten Abstützmitteln 54 abgefangen werden, bevor sie die Stellvorrichtung 36 erreichen.

Durch eine leicht abgerundete Gestaltung des mit der umfangsseitigen Wandfläche 25 der Ausnehmung 26 kooperierenden Randbereiches 64 der Dichtplatte 16 wird noch erreicht, dass die Dichtplatte 16 mit Bezug zur Trägerplatte 13 begrenzt kippbar ist. Sie kann sich daher hinsichtlich ihrer Lage an der Werkstück-Oberfläche 23 ausrichten, ohne dass Verspannungen zwischen ihr und der Trägerplatte 13 auftreten.

## Patentansprüche

1. Abdichtvorrichtung zum vorübergehenden dichten Verschließen einer Öffnung eines auf Dichtheit zu prüfenden Werkstückes (3), beispielsweise eines Kurbelgehäuses oder eines Zylinderkopfes, mit einer an einer Vorderseite mit einer Dichtungsstruktur (22) versehenen Abdichteinheit (6) und mit einer Stellvorrichtung (36) zum wahlweisen Positionieren der Abdichteinheit (6) in einer von dem zu prüfenden Werkstück (3) entfernten Grundstellung oder einer an das zu prüfende Werkstück (3) angenäherten Arbeitsstellung, wobei die Dichtungsstruktur (22) in der Arbeitsstellung in der Lage ist, mit der die zu verschließende Öffnung (5) des Werkstückes (3) umgebenden Werkstück-Oberfläche (23) in Dichtkontakt zu treten, **dadurch gekennzeichnet, dass** die Abdichteinheit (6) eine mit der Stellvorrichtung (36) antriebsmäßig verbundene Trägerplatte (13) und eine an der Trägerplatte (13) relativ zu dieser in und entgegen einer Anpressrichtung (18) verstellbar gehaltene, an ihrer in der Anpressrichtung (18) weisenden Vorderseite mit der Dichtungsstruktur (22) versehene Dichtplatte (16) enthält, und dass zwischen der Trägerplatte (13) und der Dichtplatte (16) eine sich zumindest annähernd über die rückseitige Plattenfläche (32) der Dichtplatte (16) hinweg erstreckende Fluidkammer (28) vorhanden ist, die mit mindestens einem Fluidkanal (34) für die Zufuhr und Abfuhr eines Beaufschlagungsfluides kommuniziert, wobei die Dichtplatte (16) durch Fluidbeaufschlagung der Fluidkammer (28) relativ zur Trägerplatte (13) in der Anpressrichtung (18) verstellbar ist.

2. Abdichtvorrichtung nach Anspruch 1, **dadurch gekennzeichnet, dass** die Stellvorrichtung (36) nicht hydraulisch ausgebildet ist und insbesondere als elektrisch und/oder pneumatisch betätigte Stellvorrichtung (36) ausgeführt ist.

3. Abdichtvorrichtung nach Anspruch 1 oder 2, **dadurch gekennzeichnet, dass** die durch die Stellvorrichtung (36) hervorrufbare Positionierbewegung (37) der Abdichteinheit (6) eine Linearbewegung ist.

4. Abdichtvorrichtung nach Anspruch 3, **dadurch gekennzeichnet, dass** die Positionierbewegung (37) der Abdichteinheit (6) und die Anpressbewegung (17) der Dichtplatte (16) gleich ausgerichtet sind.

5. Abdichtvorrichtung nach Anspruch 3 oder 4, **dadurch gekennzeichnet, dass** die Trägerplatte (13) über eine Linearführung (8) relativ zum Vorrichtungsgestell (2) verstellbar geführt ist.

6. Abdichtvorrichtung nach einem der Ansprüche 1 bis 5, **gekennzeichnet durch** Abstützmittel (54) zum Abstützen der Trägerplatte (13) unabhängig von der Stellvorrichtung (36) entgegen der Anpressrichtung (18) in der Arbeitsstellung der Abdichteinheit (6).

7. Abdichtvorrichtung nach Anspruch 6, **dadurch gekennzeichnet, dass** die Stellvorrichtung (36) zum Hervorrufen der Positionierbewegung (37), der Abdichteinheit (6) über eine Koppeleinrichtung (42) mit der Trägerplatte (14) antriebsmäßig verbunden ist, die beim Übergang in die Arbeitsstellung mit einer entgegen der Anpressrichtung (18) weisenden Abstützfläche (55) vor eine in Anpressrichtung (18) weisende Gegenabstützfläche (53) der Abstützmittel (54) gelangt und in der Arbeitsstellung an der Gegenabstützfläche (53) anliegt.

8. Abdichtvorrichtung nach Anspruch 7, **dadurch gekennzeichnet, dass** die Koppeleinrichtung (42) einenends über ein erstes Gelenk (46) schwenkbeweglich an der Trägerplatte (13) und andernends über ein zweites Gelenk (47) schwenkbeweglich am entlang eines Kreisbogens (48) bewegbaren Abtriebsteil (45) einer um eine Antriebsachse (44) verdrehbaren Kurbel (43) der Stellvorrichtung (36) gelagert ist, wobei die Kurbel (43) mit einem zur Erzeugung der Kurbelbewegung dienenden Antrieb (38) gekoppelt ist.

9. Abdichtvorrichtung nach Anspruch 8, **dadurch gekennzeichnet, dass** der Antrieb (38) ein Elektromotor ist.

10. Abdichtvorrichtung nach Anspruch 8 oder 9, **dadurch gekennzeichnet, dass** die Kurbel (43) scheibenartig oder hebelartig ausgebildet ist.

11. Abdichtvorrichtung nach einem der Ansprüche 8 bis 10, **dadurch gekennzeichnet, dass** die Kurbel (43) zu einer hin- und hergehenden Bewegung um eine Antriebsachse (44) antreibbar ist.

12. Abdichtvorrichtung nach einem der Ansprüche 8 bis 11, **dadurch gekennzeichnet, dass** das erste Gelenk (46) bezüglich der Antriebsachse (44) der Kurbel (43) quer zur Anpressrichtung (18) versetzt angeordnet ist und dass die Gegenabstützfläche (53) und das erste Gelenk (46) auf einer gemeinsamen, in der Anpressrichtung (18) verlaufenden Linie liegen.

13. Abdichtvorrichtung nach einem der Ansprüche 8 bis 12, **dadurch gekennzeichnet, dass** das zweite Gelenk (47) beim Übergang der Abdichteinheit (6) von der Grundstellung in die Arbeitsstellung den Totpunkt (58) der Kurbel (43) überschreitet.

14. Abdichtvorrichtung nach einem der Ansprüche 1 bis 13, **dadurch gekennzeichnet, dass** die Dichtplatte (16) begrenzt kippbar an der Trägerplatte (13) gehalten ist.

15. Abdichtvorrichtung nach einem der Ansprüche 1 bis 14, **dadurch gekennzeichnet, dass** das Beaufschlagungsfluid für die Fluidkammer (28) Druckluft ist.

## Claims

1. Sealing device for producing a temporary tight seal for an opening of a component (3) to be tested for leaks, such as a crankcase or a cylinder head, with a sealing unit (6) fitted with a seal structure (22) on its front and with a positioning device (36) for optionally positioning the sealing unit (6) in a home position at a distance from the component (3) to be tested or in a working position close to the component (3) to be tested, wherein the seal structure (22) is capable of moving into sealing contact with the component surface (23) surrounding the opening (5) of the component (3) to be sealed in the working position, **characterised in that** the sealing unit (6) comprises a mounting plate (13) drive-connected to the positioning device (36) and a sealing plate (16) held on the mounting plate (13), which is capable of movement relative thereto in and against a clamping direction (18) and is fitted with the seal structure (22) on its front facing the clamping direction (18), and **in that**, between the mounting plate (13) and the sealing plate (16), there is a fluid chamber (28) extending at least approximately over the rear plate surface (32) of the sealing plate (16), which communicates with at least one fluid passage (34) for the supply and discharge of a pressure fluid, the sealing plate (16) being displaceable relative to the mounting plate (13) in the clamping direction (18) by admitting fluid to the fluid chamber (28).

2. Sealing device according to claim 1, **characterised in that** the positioning device (36) is not designed for hydraulic operation and is in particular designed as an electrically and/or pneumatically operated positioning device (36).

3. Sealing device according to claim 1 or 2, **characterised in that** the positioning movement (37) of the sealing unit (6) initiated by the positioning device (36) is a linear movement.

4. Sealing device according to claim 3, **characterised in that** the positioning movement (37) of the sealing unit (6) and the clamping movement (17) of the sealing plate (16) are in alignment with one another.

5. Sealing device according to claim 3 or 4, **characterised in that** the mounting plate (13) is guided for movement relative to the device frame (2) by means of a linear guide (8).

6. Sealing device according to any of claims 1 to 5, **characterised by** supporting means (54) for the support of the mounting plate (13) independent of the positioning device (36) against the clamping direction (18) in the working position of the sealing unit (6).

7. Sealing device according to claim 6, **characterised in that** the positioning device (36) is drive-connected to the mounting plate (14) via a coupling device (42) to initiate the positioning movement (37) of the sealing unit (6), wherein the mounting plate, during the transition to the working position, moves with a supporting surface (55) oriented against the clamping direction (18) in front of a counter-supporting surface (53) of the supporting means (54) oriented in the clamping direction (18) and bears against the counter-supporting surface (53) in the working position.

8. Sealing device according to claim 7, **characterised in that** the coupling device (42) is at one end pivotably mounted by means of a first joint (46) on the mounting plate (13) and at the other end by means of a second joint (47) on the drive part (45) - movable along a circular arc (48) - of a crank (43) of the positioning device (36), which is pivoted about a drive axis (44), the crank (43) being coupled to a drive (38) for the generation of the cranking movement.

9. Sealing device according to claim 8, **characterised in that** the drive (38) is an electric motor.

10. Sealing device according to claim 8 or 9, **characterised in that** the crank (43) is disc-like or lever-like in design.

11. Sealing device according to any of claims 8 to 10, **characterised in that** the crank (43) can be driven to perform a reciprocating movement about a drive axis (44).

12. Sealing device according to any of claims 8 to 11, **characterised in that** the first joint (46) is offset at right angles to the clamping direction (18) with respect to the drive axis (44) of the crank (43), and **in that** the counter-supporting surface (53) and the first joint (46) lie on a common line extending in the clamping direction (18).

13. Sealing device according to any of claims 8 to 12, **characterised in that** the second joint (47) overshoots the dead centre (58) of the crank (43) during the transition of the sealing unit (6) from the home position to the working position.

14. Sealing device according to any of claims 1 to 13, **characterised in that** the sealing plate (16) is capable of a limited tilting movement on the mounting plate (13).

15. Sealing device according to any of claims 1 to 14, **characterised in that** the pressure fluid for the fluid chamber (28) is compressed air.

## Revendications

1. Dispositif d'étanchéité permettant d'obturer provisoirement, de façon étanche, une ouverture d'une pièce d'oeuvre (3) à contrôler quant à son étanchéité, par exemple d'un carter ou d'une culasse, comportant une unité d'étanchéité (6) pourvue sur une face avant d'une structure d'étanchéité (22) et comportant un dispositif de réglage (36) pour le positionnement au choix de l'unité d'étanchéité (6) dans une position de base éloignée de la pièce à contrôler ou une position de travail rapprochée de la pièce (3) à contrôler, la structure d'étanchéité (22) en position de travail étant en mesure de venir en contact d'étanchéité avec la surface (23) de la pièce entourant l'ouverture (5) à obturer de la pièce (3), **caractérisé en ce que** l'unité d'étanchéité (6) contient une plaque de support (1 3) reliée en entraînement au dispositif de réglage (36) et une plaque d'étanchéité (16) pourvue sur sa face avant, dirigée dans le sens de pressage (18), de la structure d'étanchéité (22) et maintenue déplaçable par rapport à la plaque de support (13) dans le sens de pressage (18) et dans le sens opposé à celui-ci, et **en ce qu'**entre la plaque de support (13) et la plaque d'étanchéité (16) est prévue une chambre à fluide (28) s'étendant au moins approximativement sur la surface de plaque (32) arrière de la plaque d'étanchéité (16), laquelle chambre communique avec au moins un canal pour fluide (34) pour l'amenée et l'évacuation d'un fluide d'actionnement, la plaque d'étanchéité (16) étant déplaçable, par action du fluide de la chambre pour fluide (28), par rapport à la plaque de support (13), dans le sens de pressage (18).

2. Dispositif d'étanchéité selon la revendication 1, **caractérisé en ce que** le dispositif de réglage (36) n'est pas conçu de manière hydraulique et est réalisé en particulier comme dispositif de réglage (36) à actionnement électrique et/ou pneumatique.

3. Dispositif d'étanchéité selon la revendication 1 ou 2, **caractérisé en ce que** le mouvement de positionnement (37) de l'unité d'étanchéité (6), pouvant être provoqué par le dispositif de réglage (36), est un mouvement linéaire.

4. Dispositif d'étanchéité selon la revendication 3, **caractérisé en ce que** le mouvement de positionnement (37) de l'unité d'étanchéité (6) et le mouvement de pressage (17) de la plaque d'étanchéité (16) sont orientés de la même façon.

5. Dispositif d'étanchéité selon la revendication 3 ou 4, **caractérisé en ce que** la plaque de support (13) est guidée déplaçable par rapport au bâti (2) du dispositif, par un guide linéaire (8).

6. Dispositif d'étanchéité selon l'une des revendications 1 à 5, **caractérisé par** des moyens d'appui (54) pour soutenir la plaque de support (13), indépendamment du dispositif de réglage (36), dans le sens opposé au sens de pressage (18), dans la position de travail de l'unité d'étanchéité (6).

7. Dispositif d'étanchéité selon la revendication 6, **caractérisé en ce que** pour provoquer le mouvement de positionnement (37) de l'unité d'étanchéité (6), le dispositif de réglage (36) est relié en entraînement, par un dispositif d'accouplement (42), à la plaque de support (14) qui, au passage dans la position de travail, parvient, par une surface d'appui (55) dirigée dans le sens contraire au sens de pressage (18), devant une contre-surface d'appui (53), dirigée dans le sens de pressage (18), des moyens d'appui (54), et s'applique sur la contre-surface d'appui (53), en position de travail.

8. Dispositif d'étanchéité selon la revendication 7, **caractérisé en ce que** le dispositif d'accouplement (42) est monté à une extrémité, par une première articulation (46), de manière à pouvoir pivoter sur la plaque de support (13) et, à l'autre extrémité, par une deuxième articulation (47), de manière à pouvoir pivoter sur la partie menée (45), déplaçable le long d'un arc de cercle (48), d'une manivelle (43) pouvant tourner autour d'un axe d'entraînement (44), du dispositif de réglage (36), la manivelle (43) étant accouplée à un dispositif d'entraînement (38) servant à produire le mouvement de la manivelle.

9. Dispositif d'étanchéité selon la revendication 8, **caractérisé en ce que** le dispositif d'entraînement (38) est un moteur électrique.

10. Dispositif d'étanchéité selon la revendication 8 ou 9, **caractérisé en ce que** la manivelle (43) est réalisée à la manière d'un disque ou d'un levier.

11. Dispositif d'étanchéité selon l'une des revendications 8 à 10, **caractérisé en ce que** la manivelle (43) peut être entraînée autour d'un axe d'entraînement (44), pour un mouvement en sens alternés.

12. Dispositif d'étanchéité selon l'une des revendications 8 à 11, **caractérisé en ce que** la première articulation (46) est disposée décalée par rapport à l'axe d'entraînement (44) de la manivelle (43), transversalement à la direction de pressage (18), et **en ce que** la contre-surface d'appui (53) et la première articulation (46) se situent sur une ligne commune, s'étendant dans la direction de pressage (18).

13. Dispositif d'étanchéité selon l'une des revendications 8 à 12, **caractérisé en ce qu'**au passage de l'unité d'étanchéité (6) de la position de base à la position de travail, la deuxième articulation (47) dépasse le point mort (58) de la manivelle (43).

14. Dispositif d'étanchéité selon l'une des revendications 1 à 13, **caractérisé en ce que** la plaque d'étanchéité (16) est maintenue de manière à pouvoir basculer dans une mesure limitée sur la plaque de support (13).

15. Dispositif d'étanchéité selon l'une des revendications 1 à 14, **caractérisé en ce que** le fluide d'actionnement pour la chambre à fluide (28) est de l'air comprimé.
